# EUROPEAN PATENT APPLICATION

(11) **EP 3 357 992 A1**
(43) Date of publication of application: **08.08.2018**
(21) Application number: 17154195.6
(22) Date of filing: 01.02.2017
(51) Int. Cl.: C10L 5/36, B30B 1/10, B30B 11/02, C10L 5/40

(54) **PROCESS FOR THE MANUFACTURE OF BRIQUETTES**

(71) Applicant: Oriente Servicios Tecnicos y Agrarios, S.L., 39660 Castaneda (ES)
(72) Inventor: Mirones Vitini, Carlos Javier, 39660 Castañeda (ES)
(74) Representative: Ezcurra Zufia, Maria Antonia

(57) **Abstract**

Procedure that comprises the stages of:
- Placing of the material to be compacted in a vessel in a specific amount that will depend on the nature of the material to be compacted
- Pouring of the material onto the compaction mould
- Action of a progressive press that compacts the material to a required density, where the progressive press consists of an articulated quadrilateral or parallelogram press such that by producing a horizontal displacement on the opposing articulations there occurs a vertical displacement of the articulated quadrilateral.
- Expulsion of the briquette obtained from the mould
- Recommencement of the process

Through the use of a press containing an articulated quadrilateral or parallelogram a growing progressive pressure is applied which makes it possible to compact the remains of materials up to a density of over 90% of the density of the material in solid state, thus allowing a higher subsequent briquette efficiency to be achieved.

## Description

### OBJECT OF THE INVENTION

The object of the present invention, as established in the title of the invention, is a procedure for the manufacture of briquettes, where a briquette is defined as being a solid block used either as a fuel to generate heat in stoves, open fires, stoves, furnaces and boilers or as a means for subsequent recovery.

The term "briquette" is a confusing one as briquettes can be manufactured out of several different compacted materials. The raw material of the briquette may be forestry biomass (from sawmills, door manufacturers, furniture factories, particle board factories, etc.), industrial biomass waste (steel, iron, aluminium shavings), municipal biomass waste, charcoal or from a mixture of all of them.

Briquettes are generally made from waste material, such as wood, rice husks, bagasse from sugar cane, waste from paper pulp, paper, coconut shells, cotton waste, cardboard, coal, etc. and are agglomerated with water, although in some cases with other organic waste.

The present invention is characterised by the special characteristics of the manufacturing process which allow briquettes to be obtained at high pressure at a low cost.

This invention therefore falls within the area of the manufacture of briquettes or compact blocks from waste materials.

### BACKGROUND TO THE INVENTION

Shavings and dross generated during the process of manufacturing different components are very low in density, making their transportation to recycling plants expensive. The recycling process is also expensive because they have to be melted down in rotary salt furnaces. Some have to be dried first and when melted in Vortex type furnaces, any dross of under 2 millimetres has to be removed before the vortex procedure and melted in the rotary furnace with consequent losses of around 25 % to 30%. In all cases, losses are in excess of 25%.

The transport problem is sometimes resolved by briquetting the material in standard presses that apply a pressure of up to 1,000 Kg / cm². This solves the problem of transport costs, but not the high cost and losses of the recycling process.

The problem with existing metal briquettes is that they have been obtained with low compacting levels. As a result, the efficiency rate in subsequent melting is around 85% when a standard furnace is used. Better efficiency rates would require greater compaction. This could be obtained by means of a press operating at higher pressure, but this would entail a high cost for the press. For this reason, there has been no evolution in the briquettes currently being manufactured, and they are still made as stated, since the alternatives are very costly.

The object of the present invention is therefore to develop a method of manufacturing briquettes that will enable greater compaction and consequently a very high density -close to the actual density of the product in solid state-using a procedure like that explained below, which is set out in its essentiality in Claim 1.

### DESCRIPTION OF THE INVENTION

The object of the present invention is a procedure for manufacturing briquettes that allows a density of the briquette obtained in excess of 90% of the real density of the product when treated as a solid material.

The procedure basically comprises the following stages:
- placing of the material to be compacted in a vessel in a specific amount that will depend on the nature of the material to be compacted
- pouring of the material onto the compaction mould
- action of a progressive press that compacts the material to a required density
- expulsion of the briquette obtained from the mould
- Recommencement.

The progressive press is a quadrilateral or parallelogram press arranged in such a way that by producing a horizontal displacement on the opposing articulations, there occurs a vertical displacement of the articulated quadrilateral with the special feature that in the end positions, a horizontal displacement produces a multiplied vertical displacement, which becomes greater as the position adopted by the articulated arms becomes more vertical, so that the force applied in the horizontal displacement is multiplied several times in the resulting force applied to the mould of the press.

Use of a progressive press offers a number of advantages. On the one hand, it is possible to achieve final briquette densities of over 90% of the density of the material from which the briquettes are made in its solid state; on the other, this high compaction or density is achieved at a low cost. As a consequence of the greater density and compaction, in the case of metal briquettes, an efficiency rate of 95% is achieved without the need to use a specific type of furnace. Moreover, this press can be adapted to specific requirements according to the nature of the briquettes.

By using a progressive press, pressures of over 8000 Kg/cm² can be obtained at a low cost.

Unless otherwise indicated, all technical and scientific elements used in this specification have the meaning habitually understood by a person skilled in the art to which this invention pertains. In the practice of the present invention, similar or equivalent procedures and materials to those described in the specification may be used.

Throughout the description and the claims the word "contains", "comprises" and any variations thereon shall not be intended to exclude other technical characteristics, additives, components or steps. For experts in the field, other objects, advantages and characteristics of the invention will emerge partly from the description and partly from practice with the invention.

### EXPLANATION OF FIGURES

To complete the description being made and in order to aid better understanding of the characteristics of the invention, in accordance with a preferential example of a practical embodiment thereof, this description is accompanied by a set of drawings showing as follows in indicative, but not limitative terms.

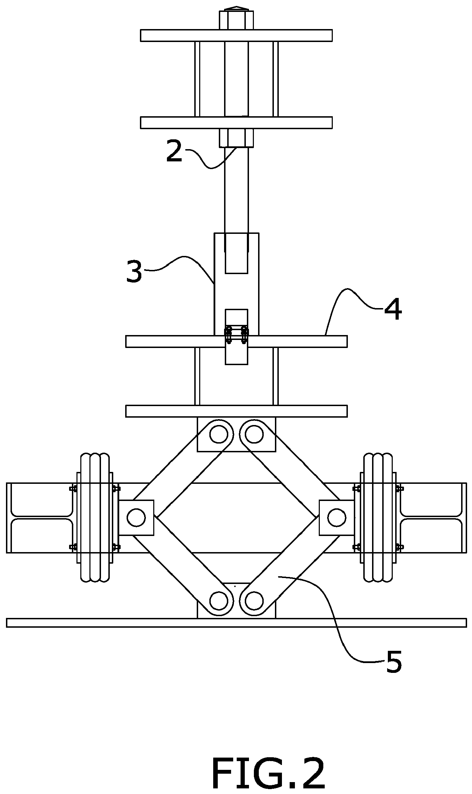

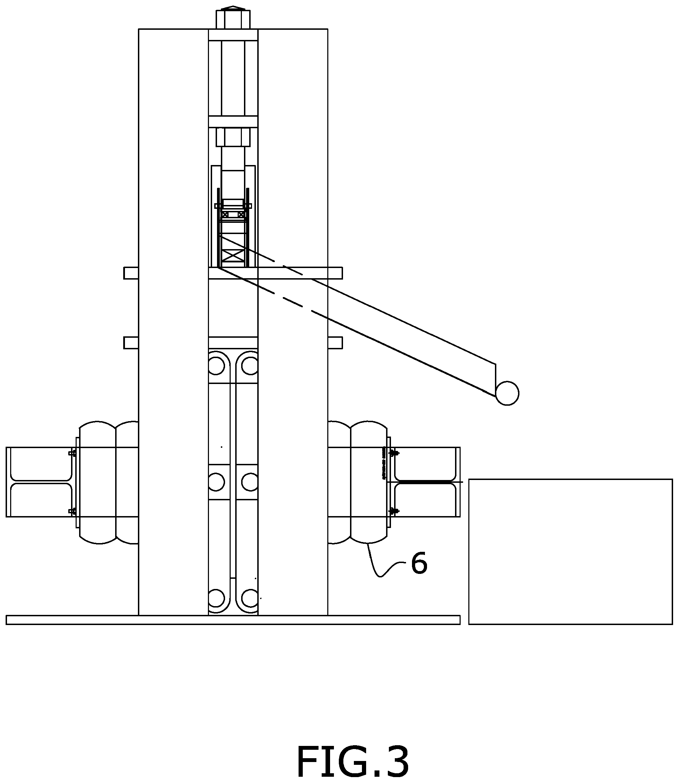

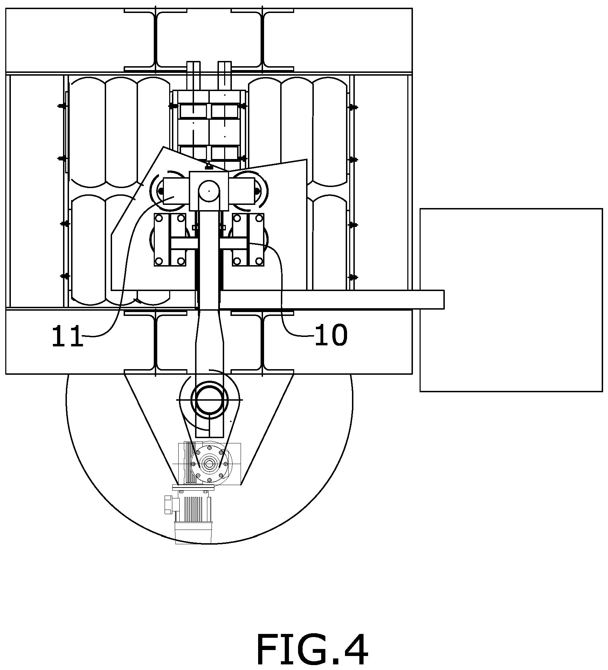

Figures 1 to 4 show different views in which different characteristics of the progressive articulated parallelogram press used in the method that forms the object of the invention can be observed.
Figure 5 shows the progressive pressure parallelogram employed in the press used in the manufacturing method.

### PREFERRED EMBODIMENT OF THE INVENTION.

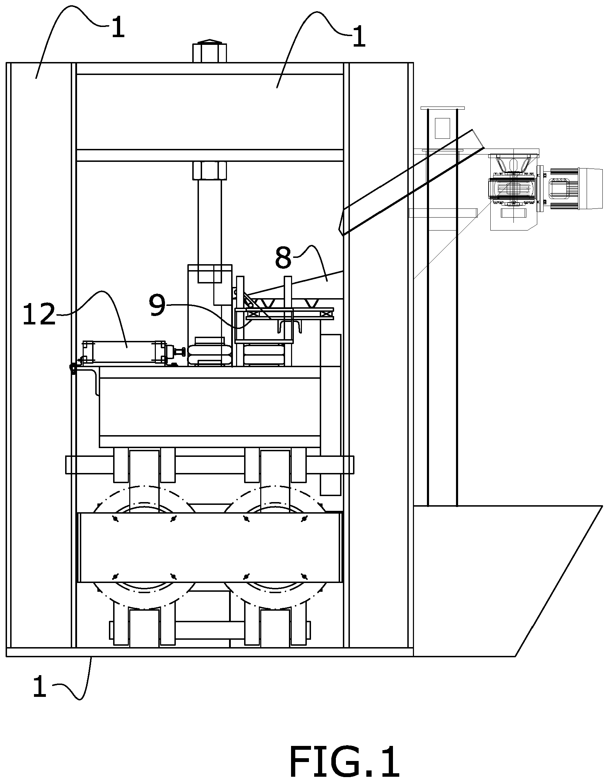

Figure 1 shows the construction characteristics of the progressive articulated parallelogram press, which in one possible form of execution contains the following characteristics:
The press is formed by a structure (1) consisting of four columns welded to a heavy plate and joined at the top by a main beam which supports the maximum resistance required for the manufacture of briquettes.

Attached to the main frame of the structure, there is a static piston (2). The press has a mould (3) into which the material is poured and in which the briquette is manufactured by means of the displacement of a moving frame (4) by the action of a progressive pressure parallelogram (5) driven by elastic cylinders (6).

The press also has a tilt feeder (8) resting on an electronic scales (9) which controls the required weight for making a briquette of a given size and density. The tilt feeder (8) is tilted by means of a tilt system (10) made up of two elastic cylinders.

The press also has a system for raising (11) the mould (10) comprising two elastic cylinders that move the arms of the mould (3) until the briquette is free to be removed from the mould. The mould is removed by means of a pushing cylinder (12).

The elastic cylinders (6) are standard pneumatic rubber cylinders that provide a horizontal pressure that is transformed into a progressive vertical force that can be up to 10 to 20 times the horizontal pressure in the final millimetres, this potential pressure being adjusted to the pressure required when the density of the briquette is close to the real density of the material being briquetted.

The electronic scale (9) is a twin platform of four weighing cells attached to the moving frame. It controls the weight to be supplied to the tilt feeder (8)

The pushing cylinder (12) is a standard pneumatic cylinder which pushes the briquette towards an outlet channel.

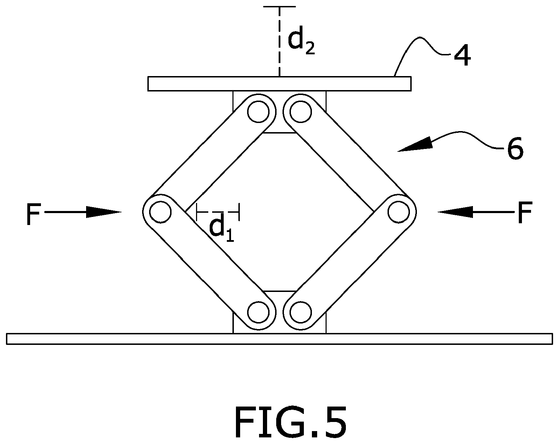

Figure 5 shows the progressive pressure parallelogram (6) in which a horizontal displacement (d1) is produced when a horizontal force (F) is applied to the opposite ends. This horizontal displacement (d1) is translated into a vertical displacement (d2) of the mobile frame of the press, which is greater than d1 and becomes greater as the arms of the parallelogram adopt an increasingly vertical position, resulting in a multiplier effect of the force applied in the horizontal displacement and consequently a greater pressure applied on the mould and thus achieving greater density in the resulting briquettes.

Having sufficiently described the nature of the present invention, and the means of implementing it, it is noted that within the same essence, it may be made in other embodiments differing in detail from that indicated herein as an example, and to which the protection obtained shall equally extend, provided that it does not alter, change or modify its basic principle.

## Claims

1. Procedure for manufacturing briquettes basically comprising the following stages:
- Placing of the material to be compacted in a vessel in a specific amount that will depend on the nature of the material to be compacted
- Pouring of the material onto the compaction mould
- Action of a progressive press that compacts the material to a required density, where the progressive press consists of an articulated quadrilateral or parallelogram press such that by producing a horizontal displacement on the opposing articulations there occurs a vertical displacement of the articulated quadrilateral.
- Expulsion of the briquette obtained from the mould
- Recommencement of the process

2. Procedure for manufacture of briquettes in accordance with Claim 1 **characterised in that** the pressure applied depending on the nature of the material to be compacted is such that the density of the resulting compacted material is over 90% of the density of the material in solid state.
